(19) 

**Europäisches Patentamt**
**European Patent Office**
**Office européen des brevets**

(11) **EP 4 597 369 A1**

(12) **EUROPEAN PATENT APPLICATION**
published in accordance with Art. 153(4) EPC

(43) Date of publication:
06.08.2025 Bulletin 2025/32

(21) Application number: 23870352.4

(22) Date of filing: 14.09.2023

(51) International Patent Classification (IPC):
**G06N 3/0464** (2023.01) **G06N 3/08** (2023.01)

(52) Cooperative Patent Classification (CPC):
**G06N 3/0464; G06N 3/08**

(86) International application number:
**PCT/CN2023/118714**

(87) International publication number:
**WO 2024/067115 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.09.2022 CN 202211197060

(71) Applicant: **Huawei Technologies Co., Ltd.**
**Shenzhen, Guangdong 518129 (CN)**

(72) Inventors:
• **LI, Yinchuan**
**Shenzhen, Guangdong 518129 (CN)**
• **SHAO, Yunfeng**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **TRAINING METHOD FOR GFLOWNET, AND RELATED APPARATUS**

(57) A method for training a generative flow network is provided, and is applied to the field of artificial intelligence technologies. In the method, in a process of training the generative flow network, for any state of an agent, a plurality of first actions performed in the state and a plurality of second actions that can be transferred to the state are selected from a continuous action space in a sampling manner, then, predicted values corresponding to the plurality of first actions and the plurality of second actions are output by using the generative flow network, and further, a loss function used to update the generative flow network is obtained through calculation. In this solution, a plurality of actions obtained through sampling are used to approximately represent the continuous action space, and then, the generative flow network is trained, so that the trained generative flow network can be applied to processing of continuous control tasks. This increases a scenario in which the generative flow network can be applied, and facilitates promotion and application of the generative flow network.

Obtain first state information, where the first state information indicates a first state of an agent — 301

Input the first state information into a generative flow network, to obtain a plurality of first output values, where the plurality of first output values are predicted values obtained when a plurality of first actions are separately selected in the first state — 302

Input a plurality of pieces of second state information into the generative flow network, to obtain a plurality of second output values, where the plurality of pieces of second state information indicate a plurality of second states that can be transferred to the first state after corresponding second actions are performed, the plurality of pieces of second state information are in a one-to-one correspondence with the plurality of second actions, the plurality of second output values are predicted values obtained when the corresponding second actions are respectively selected in the plurality of second states, and the plurality of first actions and the plurality of second actions each are obtained through sampling in a continuous action space — 303

Update the generative flow network based on a loss function, where the loss function is obtained based on differences between the plurality of first output values and the plurality of second output values — 304

FIG. 3

EP 4 597 369 A1

## Description

This application claims priority to Chinese Patent Application No. 202211197060.8, filed with the China National Intellectual Property Administration on September 28, 2022 and entitled "METHOD FOR TRAINING GENERATIVE FLOW NETWORK AND RELATED APPARATUS", which is incorporated herein by reference in its entirety.

## TECHNICAL FIELD

This application relates to the field of artificial intelligence (Artificial Intelligence, AI) technologies, and in particular, to a method for training a generative flow network and a related apparatus.

## BACKGROUND

Generative flow networks (GFlowNets) are an emerging technology, and can make up for deficiency of reinforcement learning in exploration tasks. Specifically, based on the Bellman equation, reinforcement learning is usually trained to maximize an expectation for a future reward. Therefore, in a strategy learned through reinforcement learning, sampling tend to be performed on action sequences with high rewards. In comparison, an objective for training a generative flow network is to approximately sample candidate actions based on a given reward function, instead of generating a single action sequence with a high reward. Specifically, the generative flow networks are more like a model in which sampling is performed on different candidates in an active learning environment. Therefore, the generative flow networks are more suitable for the exploration tasks.

Currently, generative flow networks in a related technology are limited to being applied to a deterministic discrete environment, that is, a state of an agent in the discrete environment and an action that can be performed by the agent are limited. However, in a real environment, there are a large quantity of continuous control tasks. In these continuous control tasks, a state of the agent in an environment and an action that can be performed by the agent are infinite. Therefore, the current generative flow networks are difficult to be applied to processing of the continuous control tasks. Consequently, there are few scenarios in which the generative flow networks can be applied, and promotion and application of the generative flow networks are difficult.

## SUMMARY

Embodiments of this application provide a method for training a generative flow network. A plurality of actions obtained through sampling are used to approximately represent a continuous action space, and then, the generative flow network is trained, so that the trained generative flow network can be applied to processing of continuous control tasks. This increases a scenario in which the generative flow network can be applied, and facilitates promotion and application of the generative flow network.

A first aspect of this application provides a method for training a generative flow network, applied to an electronic device, to train to obtain a generative flow network that can process a continuous control task. The method includes: obtaining first state information, where the first state information indicates a first state of an agent. The agent is an ontology of a task to which the generative flow network is applied, and is a learner or a decision maker. For example, when the generative flow network is applied to processing of an autonomous driving task, the agent is an autonomous driving vehicle on which the generative flow network is deployed. The first state information may be information that indicates a location of the autonomous driving vehicle used as the agent on a map, a distance between the autonomous driving vehicle and another vehicle, a distance between the autonomous driving vehicle and an obstacle, and the like.

Then, the first state information is input into the generative flow network, to obtain a plurality of first output values, where the plurality of first output values are predicted values obtained when a plurality of first actions are separately selected in the first state. Simply, after the first state information is input into the generative flow network, the generative flow network can obtain, through prediction, predicted values obtained when all given actions are separately selected in the first state, and these predicted values can be converted into probability values used for selecting all the actions.

Next, a plurality of pieces of second state information are input into the generative flow network, to obtain a plurality of second output values, where the plurality of pieces of second state information indicate a plurality of second states that can be transferred to the first state after corresponding second actions are performed, the plurality of pieces of second state information are in a one-to-one correspondence with the plurality of second actions, the plurality of second output values are predicted values obtained when the corresponding second actions are respectively selected in the plurality of second states, and the plurality of first actions and the plurality of second actions each are obtained through sampling in a continuous action space.

Specifically, because the first state may be obtained by transferring another state, a pre-transfer state may be determined based on the first state that is used as a post-transfer state. Specifically, because an action space in which an action used to transfer the state is located is continuous, that is, the action used for transfer to obtain the first state is infinite, the plurality of second actions may be obtained in a sampling manner, and the plurality of second actions are actions used for transfer to the first state. In addition, because a rule for transfer between states is usually unchanged, the plurality of second states before transfer to the first state can be determined based on the plurality of second actions.

Finally, the generative flow network is updated based on a loss function, where the loss function is obtained based on differences between the plurality of first output values and the plurality of second output values. Specifically, after the plurality of first output values and the plurality of second output values are obtained, the plurality of first output values are considered as a plurality of output flows obtained through sampling in the first state, the plurality of second output values are considered as a plurality of input flows obtained through sampling in the first state, and further, the loss function is calculated based on differences between the plurality of first output values and the plurality of second output values, to update the generative flow network based on the loss function.

In the solution, in a process of training the generative flow network, for any state of an agent, a plurality of first actions performed in the state and a plurality of second actions that can be transferred to the state are selected from a continuous action space in a sampling manner, then, predicted values corresponding to the plurality of first actions and the plurality of second actions are output by using the generative flow network, and further, a loss function used to update the generative flow network is obtained through calculation. In this solution, a plurality of actions obtained through sampling are used to approximately represent the continuous action space, and then, the generative flow network is trained, so that the trained generative flow network can be applied to processing of continuous control tasks. This increases a scenario in which the generative flow network can be applied, and facilitates promotion and application of the generative flow network.

In a possible implementation, an action included in the continuous action space is a continuous variable. That is, the action in the action space may be a variable with any value in a specific interval. For example, an angle at which a robot arm rotates, a speed and an acceleration of an autonomous driving vehicle, and the like are actions of continuous variables.

In a possible implementation, a quantity of the plurality of first actions is the same as a quantity of the plurality of second actions. For example, both the quantity of the plurality of first actions and the quantity of the plurality of second actions are K, where K is an integer greater than 1. For example, K is a value like 1000, 5000, or 10000. A specific value of K is not limited in this embodiment.

In this solution, the quantity of the plurality of first actions is limited to be the same as the quantity of the plurality of second actions, so that accuracy of approximately representing the continuous action space by using the plurality of first actions and the plurality of second actions can be improved as much as possible, and further, precision of a generative flow network obtained through training is improved.

In a possible implementation, the method further includes: obtaining a first reward value, where the first reward value is obtained based on a reward obtained by the agent when the agent transfers to the first state. Then, the loss function is calculated based on the first reward value, the plurality of first output values, and the plurality of second output values. Specifically, the loss function is obtained based on a difference between a subtraction result and the first reward value, and the subtraction result is a difference between a sum of the plurality of first output values and a sum of the plurality of second output values.

Specifically, in some cases, when transferring to some specific states, the agent can obtain a specific reward. In this way, the agent is encouraged to transfer to the some specific states as much as possible in an exploration process. In this case, for a state node with a reward, an optimization objective of the generative flow network is to make an inflow of the state node as close as possible to a sum of an outflow and the reward.

In a possible implementation, the first reward value may be related to the quantity of the plurality of first actions and a metric value of the action space, and the metric value indicates a size of the action space. Specifically, after a reward corresponding to the first state is obtained, the first reward value can be obtained through calculation based on the reward corresponding to the first state, the quantity of the plurality of first actions, and the metric value of the action space. For example, it is assumed that the reward corresponding to the first state is $R(st)$, the quantity of the plurality of first actions is K, and the metric value of the action space is $\mu(A)$. In this case, the first reward value may be represented as $K/\mu(A) \times R(st)$.

In a possible implementation, the loss function includes a first loss function and a second loss function. The first loss function is obtained based on a difference between a sum of the plurality of first output values and a sum of the plurality of second output values, the second loss function is obtained based on a difference between a target output value and a second reward value, the target output value is one of the plurality of second output values, and the second reward value is related to the action corresponding to the second output value.

Specifically, in some other cases, a reward that can be obtained by the agent in a state transfer process may be related to an action performed by the agent, that is, the reward is no longer related only to a state of the agent. In this case, a reward value in the first state may be calculated based on the second action performed during transfer to the first state.

In this solution, the loss function is divided into two parts. One part is a difference between an inflow and an outflow that correspond to a state node, and the other part is a difference between an output value of the generative flow network for an action and a reward value corresponding to the action. In this way, an effective loss function can be constructed in an environment in which a reward is related to an action, so that precision of a generative flow network obtained through training is improved.

In a possible implementation, the method further includes: obtaining the plurality of second actions from the action space through sampling, that is, randomly selecting a plurality of actions from the action space; and inputting the first state information and the plurality of second actions into a state prediction model, to obtain the plurality of pieces of second state information, where the state prediction model is used to obtain a pre-transfer state through prediction based on an execution action and a post-transfer state.

In this solution, the state prediction model is set, so that a state before transfer can be effectively determined based on a state after the transfer and an execution action used for state transfer, to construct a subsequent loss function, and further train the generative flow network.

In a possible implementation, the first state information is obtained based on a state sequence, and the state sequence indicates a plurality of ordered states. In the state sequence, in a previous state, an action is performed to transfer from the previous state to a next state. In other words, the state sequence records a plurality of states that are transferred in an orderly manner and that are of the agent.

In a possible implementation, a state in the plurality of states is obtained based on a previous state and an execution action corresponding to the previous state, the execution action corresponding to the previous state is selected from a plurality of actions obtained through sampling in the action space, and selection probabilities of the plurality of actions are obtained based on predicted values output by the generative flow network.

In a possible implementation, the generative flow network is used to process a task having a continuous action space, and the task includes an autonomous driving task, a robot control task, a game character control task, a recommendation task, a parameter optimization task, or a protein structure search task.

A second aspect of this application provides an apparatus for training a generative flow network. The apparatus includes: an obtaining module, configured to obtain first state information, where the first state information indicates a first state of an agent; and

a processing module, configured to input the first status information into the generative flow network, to obtain a plurality of first output values, where the plurality of first output values are predicted values obtained when a plurality of first actions are separately selected in the first status, where

the processing module is further configured to input a plurality of pieces of second state information into the generative flow network, to obtain a plurality of second output values, where the plurality of pieces of second state information indicate a plurality of second states that can be transferred to the first state after corresponding second actions are performed, the plurality of pieces of second state information are in a one-to-one correspondence with the plurality of second actions, the plurality of second output values are predicted values obtained when the corresponding second actions are respectively selected in the plurality of second states, and the plurality of first actions and the plurality of second actions each are obtained through sampling in a continuous action space; and

the processing module is further configured to update the generative flow network based on a loss function, where the loss function is obtained based on differences between the plurality of first output values and the plurality of second output values.

In a possible implementation, an action included in the continuous action space is a continuous variable.

In a possible implementation, a quantity of the plurality of first actions is the same as a quantity of the plurality of second actions.

In a possible implementation, the obtaining module is further to obtain a first reward value, where the first reward value is obtained based on a reward obtained by the agent when the agent transfers to the first state; and

the loss function is obtained based on a difference between a subtraction result and the first reward value, and the subtraction result is a difference between a sum of the plurality of second output values and a sum of the plurality of first output values.

In a possible implementation, the first reward value is related to the quantity of the plurality of first actions and a metric value of the action space, and the metric value indicates a size of the action space.

In a possible implementation, the loss function includes a first loss function and a second loss function; and the first loss function is obtained based on a difference between a sum of the plurality of first output values and a sum of the plurality of second output values, the second loss function is obtained based on a difference between a target output value and a second reward value, the target output value is one of the plurality of second output values, and the second reward value is related to the action corresponding to the second output value.

In a possible implementation, the processing module is further configured to:

obtain the plurality of second actions from the action space through sampling; and
input the first state information and the plurality of second actions into a state prediction model, to obtain the plurality of pieces of second state information, where the state prediction model is used to obtain a pre-transfer state through prediction based on an execution action and a post-transfer state.

In a possible implementation, the first state information is obtained based on a state sequence, and the state sequence indicates a plurality of ordered states.

In a possible implementation, a state in the plurality of states is obtained based on a previous state and an execution action corresponding to the previous state, the execution action corresponding to the previous state is selected from a plurality of actions obtained through sampling in the action space, and selection probabilities of the plurality of actions are obtained based on predicted values output by the generative flow network.

In a possible implementation, the generative flow network is used to process a task having a continuous action space, and the task includes an autonomous driving task, a robot control task, a game character control task, a recommendation task, a parameter optimization task, or a protein structure search task.

A third aspect of this application provides an apparatus for training a generative flow network. The apparatus may include a processor, the processor is coupled to a memory, the memory stores program instructions, and when the program instructions stored in the memory are executed by the processor, the method according to any one of the first aspect or the implementations of the first aspect is implemented. For steps performed by the processor in the possible implementations of the first aspect, refer to the first aspect. Details are not described herein again.

A fourth aspect of this application provides a computer-readable storage medium. The computer-readable storage medium stores a computer program, and when the computer program is run on a computer, the computer is enabled to perform the method according to any one of the first aspect or the implementations of the first aspect.

A fifth aspect of this application provides a circuit system. The circuit system includes a processing circuit, and the processing circuit is configured to perform the method according to any one of the first aspect or the implementations of the first aspect.

A sixth aspect of this application provides a computer program product. When the computer program product runs on a computer, the computer is enabled to perform the method according to any one of the first aspect or the implementations of the first aspect.

A seventh aspect of this application provides a chip system. The chip system includes a processor, configured to support a server or a threshold obtaining apparatus in implementing a function in any one of the first aspect or the implementations of the first aspect, for example, sending or processing data and/or information in the foregoing method. In a possible design, the chip system further includes a memory. The memory is configured to store program instructions and data that are necessary for a server or a communication device. The chip system may include a chip, or may include a chip and another discrete component.

For beneficial effect of the second aspect to the seventh aspect, refer to descriptions in the first aspect. Details are not described herein again.

## BRIEF DESCRIPTION OF DRAWINGS

FIG. 1 is a diagram of a structure of a flow model according to an embodiment of this application;
FIG. 2 is a diagram of an autonomous driving scenario according to an embodiment of this application;
FIG. 3 is a schematic flowchart of a method for training a generative flow network according to an embodiment of this application;
FIG. 4 is a diagram of an execution process of a method for training a generative flow network according to an embodiment of this application;
FIG. 5 is a diagram of generating a state sequence according to an embodiment of this application;
FIG. 6 is a diagram of determining a selection probability of an action according to an embodiment of this application;
FIG. 7 is a diagram of a structure of an apparatus for training a generative flow network according to an embodiment of this application;
FIG. 8 is a diagram of a structure of an execution device according to an embodiment of this application;
FIG. 9 is a diagram of a structure of a chip according to an embodiment of this application; and
FIG. 10 is a diagram of a structure of a computer-readable storage medium according to an embodiment of this application.

## DESCRIPTION OF EMBODIMENTS

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects that have a same attribute are described in embodiments of this application. In addition, the terms "include", "have" and any other variants thereof mean to cover the non-exclusive inclusion, so that a process, method, system, product, or device that includes a series of units is not necessarily limited to those units, but may include other units not expressly listed or inherent to such a process, method, product, or device.

For ease of understanding, the following first describes technical terms in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f\left(\sum_{s=1}^{n} W_s x_s + b\right).$$

Herein, s=1, 2, ..., and n, where n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer. The activation function may be a sigmoid function. The neural network is a network formed by linking a plurality of single neurons together. To be specific, an output of a neuron may be an input of another neuron. An input of each neuron may be connected to a local receptive field of a previous layer, to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. There is no special measurement standard for "many" herein. The DNN is divided based on locations of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Although the DNN seems complex, the DNN is actually not complex in terms of work at each layer. Simply, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, such a simple operation is performed on the input vector $\vec{x}$, to obtain the output vector $\vec{y}$. Because the DNN has a large quantity of layers, there are a large quantity of coefficients W and offset vectors $\vec{b}$. Definitions of these parameters in the DNN are as follows: The coefficient W is used as an example. It is assumed that in a DNN having three layers, a linear coefficient from a fourth neuron at a second layer to a second neuron at a third layer is defined as $W_{24}^3$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^L$. It should be noted that there is no parameter W at the input layer. In the deep neural network, more hidden layers make the network more capable of describing a complex case in the real world. Theoretically, a model with more parameters has higher complexity and a larger "capacity". This indicates that the model can complete a more complex learning task. Training the deep neural network is a process of learning a weight matrix, and an ultimate objective of the training is to obtain a weight matrix (a weight matrix formed by vectors W at many layers) of all layers of the trained deep neural network.

(3) Graph (Graph)

The graph is a data structure that includes at least one vertex and at least one edge. In some scenarios, the vertex on the graph may be mapped to an entity, and the edge on the graph may be mapped to a relationship between entities. The graph may be a directed graph or an undirected graph. Certainly, the graph may further include other data other than the vertex and the edge, for example, a label of the vertex and a label of the edge.

(4) Loss function

In a process of training a neural network, an output of the neural network is expected to be as close as possible to a value that is truly expected to be predicted. Therefore, a predicted value of a current network and a target value that is truly expected may be compared, and then, a weight vector of each layer of the neural network may be updated based on a difference between the predicted value of the current network and the target value that is truly expected (certainly, an initialization process is usually performed before a first update, that is, a parameter is preconfigured at each layer of the neural network). For example, if a predicted value of the network is high, the weight vector is adjusted to make the prediction lower, and adjustment is continuously performed, until the neural network can predict a target value that is truly expected or a value that is very approximate to the target value that is truly expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of reducing the loss as much as possible.

(5) Back propagation algorithm

In the neural network, an error back propagation (back propagation, BP) algorithm may be used to correct a value of a parameter in an initial model in a training process, so that an error loss of the model becomes increasingly small. Specifically, an input signal is transferred forward until an error loss occurs in an output, and the parameter in the initial model is updated based on back propagation error loss information, so that the error loss converges. The back propagation algorithm is an error-loss-centered back propagation motion, and is intended to obtain an optimal model parameter, for example, a weight matrix.

(6) Reinforcement learning

The reinforcement learning is one of the fields in machine learning, and mainly focuses on how an agent takes different actions in an environment to maximize cumulative rewards. Generally, the reinforcement learning mainly includes an agent (Agent), an environment (Environment), a state (State), an action (Action), and a reward (Reward). The agent is an ontology of the reinforcement learning, and is a learner or a decision maker. The environment is everything other than the agent in the reinforcement learning, and mainly includes a state set. The state is a piece of data that represents the environment, and the state set includes all possible states in the environment. The action is an action that may be performed by the agent, and an action set includes all actions that may be performed by the agent. The reward is a positive/negative feedback signal obtained by the agent after the agent performs an action, and a reward set includes all feedback information that may be obtained by the agent. The reinforcement learning is actually learning of mapping from environment states to actions.

After the agent performs an action, the environment changes to a new state, and the environment provides a reward signal (a positive reward or a negative reward) for the new state. Subsequently, the agent performs, based on the new state and the reward fed back by the environment, a new action according to a specific policy. The foregoing process is a manner in which the agent interacts with the environment through the state, the action, and the reward, and an ultimate objective of the foregoing process is to make the agent maximize the cumulative rewards.

Through the reinforcement learning, the agent may learn a specific state of the agent and a specific action that should be performed by the agent to make the agent obtain a maximum reward. Because the manner of interaction between the agent and the environment is similar to a manner of interaction between a human and an environment, the reinforcement learning may be considered as a general learning framework, and may be used to resolve a problem in general artificial intelligence. Therefore, the reinforcement learning is also referred to as a machine learning method in general artificial intelligence.

In addition, there are two extremely important concepts in reinforcement learning tasks: exploitation (exploit) and exploration (explore), which are sometimes called utilization and probe respectively. In the reinforcement learning, the exploitation means that the agent selects an optimal action from all known 2-tuple (state-action) distributions based on a principle of maximizing an action value. In other words, the agent selects from known actions, and this is referred to as the exploitation (or utilization). The exploration means that the agent selects another unknown action outside the known 2-tuple (state-action) distributions.

(7) Generative flow network

The generative flow network (or referred to as a flow-based generative flow network or a generative flow network) is a flow model in which sampling is performed in a sequence decision manner and a composite structure is constructed, so that a probability of generating a structure is proportional to a reward value of the structure. The generative flow network constructs the composite structure in the sequence decision manner. The generative flow network constructs a flow model based on a directed acyclic graph, that is, each state node has a plurality of parent nodes. This is different from a case in a tree structure in which each state node has only one parent node. The directed acyclic graph has a unique initial node and a plurality of termination nodes. The generative flow network starts sampling from the initial node of the directed acyclic graph to generate an action sequence, completes transfer between states, and ends the sampling when the termination node is reached. The termination node has a corresponding composite structure.

The initial node may include output traffic, an intermediate node may include input traffic and output traffic (or a reward value), and the termination node may include input traffic and a reward value. If the flow model is considered as a water pipe, a water flow rate of the initial node is a total inflow of the model, and a sum of water flow rates of all the termination nodes is a total outflow of the model. For each intermediate node, an inflow is equal to an outflow. An inflow and an outflow of a node are predicted by using a neural network (that is, a generative flow may be specifically constructed by using the neural network). A flow matching constraint is used as a target function for optimization, so that the generative flow network can learn a policy (that is, optimize the neural network). In this way, a probability of generating a composite structure through sampling is proportional to a reward value of the composite structure, and a structure with a higher reward value is more likely to be sampled. In this way, the generative flow network can sample a series of structures with high reward values.

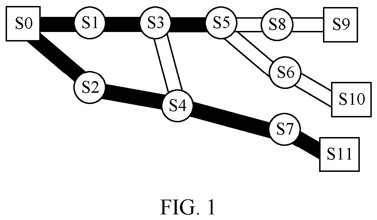

For an example diagram of the generative flow network, refer to FIG. 1. As shown in FIG. 1, $s_i$ represents a state, $x_j$ represents a composite structure, $s_0$ is an initial node, and $s_5$, $s_8$, $s_{11}$, $s_{13}$, and $s_{16}$ are termination nodes, because $s_5$, $s_8$, $s_{11}$, $s_{13}$, and $s_{16}$ correspond to composite structures $x_5$, $x_8$, $x_{11}$, $x_{13}$, and $x_{16}$.

(8) Discrete variable

Variables are classified into discrete variables and continuous variables based on whether values thereof are represented as being continuous. The discrete variable is a variable whose values may be listed in a specific sequence and usually are set to integers, for example, a quantity of employees, a quantity of factories, and a quantity of machines.

(9) Continuous variable

The continuous variable is a variable that may be set to any value in a specific interval. Values of the continuous variable are continuous, and two adjacent values may be segmented infinitely, that is, the continuous variable may be set to an infinite quantity of values. For example, a specification and a size of a production part, a measured height, weight, and chest circumference of a human body, an angle at which a robot arm rotates, a speed and an acceleration of an autonomous driving vehicle, and the like are continuous variables, and values thereof can be obtained only in a measurement or metering method.

Currently, a generative flow network in a related technology is limited to being applied to a deterministic discrete environment, that is, a state of an agent in the discrete environment and an action that can be performed by the agent are limited. For example, when a generative flow is applied to a chess playing environment, because an area in which a chess piece can be placed on a chessboard is limited, an action (namely, an action of placing the chess piece) that can be performed by the agent in each state is limited, and can be obtained by traversing a chessboard. In addition, a state of the agent (namely, a current state in which the chess piece is placed on the chessboard) is also limited. When an environment to which the generative flow network is applied is a discrete environment, the generative flow network can calculate, from a limited action space, a probability of using each action, and determine, from a limited reward set, a reward value obtained by sampling an action, to complete policy learning.

A flow model shown in FIG. 1 is used as an example. Each state node in FIG. 1 may be considered as a state of an agent, and an edge between the state nodes may be considered as an action performed during transfer from a previous state node to a next state node. In addition, a value (namely, an outflow/inflow of the foregoing node) of the edge between the state nodes is used to represent a probability of performing an action. In a process of training the generative flow network, a loss function is obtained, through calculation, mainly by constraining an inflow and an outflow that are obtained by the generative flow network for a state node, that is, the inflow of the state node is equal to the outflow of the state node.

Simply, for any state node, the state node may have a plurality of parent nodes and a plurality of child nodes, values of edges between the state node and the plurality of parent nodes are the inflows corresponding to the state node, and values of edges between the state node and the plurality of child nodes are the outflows corresponding to the state node. When the loss function of the generative flow network is calculated, the loss function may be set to a difference between the inflow and the outflow of the state node, so that the inflow and the outflow of the state node are as close as possible as an optimization objective of the generative flow network.

However, in a real environment, there are a large quantity of continuous control tasks. In these continuous control tasks, a state of the agent in an environment and an action that can be performed by the agent are infinite. For example, in an autonomous driving task, the agent is an autonomous driving vehicle, and actions that can be performed by the autonomous driving vehicle are continuous and infinite. For example, the autonomous driving vehicle can adjust a speed of the autonomous driving vehicle to 0 km/h to 200 km/h, or the autonomous driving vehicle can adjust a turning angle of the autonomous driving vehicle to 0 degrees to 40 degrees. In continuous control tasks, the generative flow network cannot traverse all state-action pairs and corresponding rewards. Simply, for any state node, the generative flow network cannot traverse all parent nodes and all child nodes corresponding to the state node, and therefore, cannot calculate a difference between all inflows and all outflows corresponding to the state node. Therefore, it is difficult to apply the current generative flow network to processing of the continuous control tasks. Consequently, there are few scenarios in which the generative flow network can be applied, and it is difficult to promote and apply the generative flow network.

In view of this, embodiments of this application provides a method for training a generative flow network. In a process of training the generative flow network, for any state of an agent, a plurality of first actions performed in the state and a plurality of second actions that can be transferred to the state are selected from a continuous action space in a sampling manner, then, predicted values corresponding to the plurality of first actions and the plurality of second actions are output by using the generative flow network, and further, a loss function used to update the generative flow network is obtained through calculation. In this solution, a plurality of actions obtained through sampling are used to approximately represent the continuous action space, and then, the generative flow network is trained, so that the trained generative flow network can be applied to processing of continuous control tasks. This increases a scenario in which the generative flow network can be applied, and facilitates promotion and application of the generative flow network.

Specifically, the method for training a generative flow network provided in embodiments of this application may be applied to an electronic device. For example, the electronic device may be a server, a robot, a smartphone (mobile phone), a personal computer (personal computer, PC), a notebook computer, a wireless electronic device in industrial control (industrial control), a wireless electronic device in self-driving (self-driving), a wireless electronic device in a smart grid (smart grid), a wireless electronic device in logistics and warehousing, a wireless electronic device in transportation safety (transportation safety), a wireless electronic device in a smart city (smart city), or the like.

The foregoing describes a device to which the method for training a generative flow network provided in embodiments of this application is applied. The following describes a scenario to which the method for training a generative flow network provided in embodiments of this application is applied. Specifically, the method for training a generative flow network provided in embodiments of this application may be applied to training of a generative flow network for executing a continuous control task (namely, a task having a continuous action space). The continuous control task includes, for example, an autonomous driving task, a robot control task, a game character control task, a recommendation task, a parameter optimization task, or a protein structure search task.

In an autonomous driving task, each intelligent vehicle is considered as an agent, and each intelligent vehicle can obtain, by using a sensor or the like, information about the ego vehicle and information about another intelligent vehicle, for example, information such as a location of the ego vehicle on a road, a speed of the ego vehicle, a distance between another intelligent vehicle and the ego vehicle, and a speed and an acceleration of the another intelligent vehicle. The information about the ego vehicle and the information about the another intelligent vehicle that are obtained by each intelligent vehicle may be considered as an observed value of the intelligent vehicle for an environment state, and may also be referred to as state information corresponding to a state of the intelligent vehicle. For the intelligent vehicle, the intelligent vehicle needs to determine, based on the state of the intelligent vehicle, an action performed by the intelligent vehicle, for example, an action like acceleration, deceleration, or lane change, so that positive feedback obtained by the intelligent vehicle from an environment is as high as possible, that is, a safety coefficient of the intelligent vehicle is as high as possible, or travel time for the intelligent vehicle to reach a destination is as short as possible. An action space in which an action that can be performed by the intelligent vehicle is located is continuous. For example, the action space specifically includes: accelerating to 80 km/h to 200 km/h, decelerating to 0 km/h to 80 km/h, and adjusting a turning angle to 0 degrees to 40 degrees. The intelligent vehicle may perform any action in the action space. In addition, because the action space is continuous, that is, the action in the action space is a continuous variable, the intelligent vehicle actually has difficulty in traversing all actions in the action space.

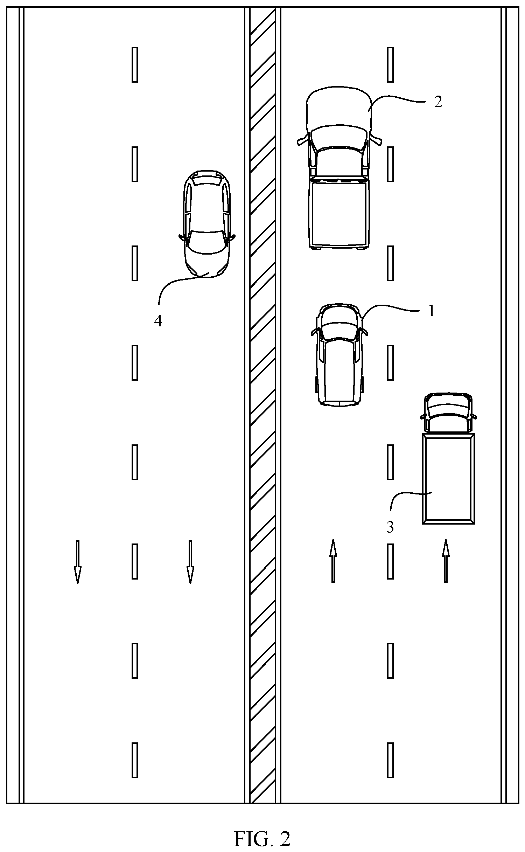

For example, FIG. 2 is a diagram of an autonomous driving scenario according to an embodiment of this application. As shown in FIG. 2, the autonomous driving scenario includes an intelligent vehicle 1, an intelligent vehicle 2, an intelligent vehicle 3, and an intelligent vehicle 4, that is, the foregoing four intelligent vehicles form a multi-agent learning environment. The intelligent vehicle 1 is used as an example. In a process in which the intelligent vehicle 1 executes an autonomous driving task, the intelligent vehicle 1 obtains information about the intelligent vehicle 2 on a front side, the intelligent vehicle 3 on a rear right side, and the intelligent vehicle 4 on a front left side, and uses the information as an observed value of the intelligent vehicle 1 for an environment state. Then, the intelligent vehicle 1 determines, based on the observed value for the environment state, an action performed by the intelligent vehicle 1, for example, driving with deceleration or changing a lane to the right.

In a robot control task, each robot is considered as an agent, and a plurality of robots may collaborate to complete a specific task. For example, in the logistics and warehousing field, a plurality of robots collaborate to move specified goods to a specified place. Similarly, each robot can obtain, by using a sensor or the like, information about the robot and another robot, for example, information such as a speed of the robot, a rotation angle of a mechanical arm of the robot, a distance between the another robot and the robot, an action currently performed by the another robot, and a running speed of the another robot. The information that is about the another robot and that is obtained by each robot may be considered as an observed value of the robot for an environment state. For the robot, the robot needs to determine, based on the observed value for the environment state, an action performed by the robot, for example, an action like a movement direction, a rotation angle, and a motion pause, so that positive feedback obtained by the robot from an environment is as high as possible, that is, the robot completes a moving task within as little as possible time on a premise of avoiding collision. Similarly, an action space in which an action that can be performed by the robot is located is continuous. For example, the action space specifically includes: adjusting a movement direction to a direction of 0 degrees to 360 degrees, and adjusting an arm rotation angle to 0 degrees to 180 degrees.

In a game character control task, each character unit is considered as an agent, and a plurality of character units may collaborate to complete a specific battle task. For example, in a large instant strategy game, a plurality of character units of a same race jointly perform a task of battling with a character unit of another race. Each character unit can obtain information about the character unit and information about another character unit of the same race, for example, information such as a location of the character unit, and an attack target, an attack manner, and a movement direction that are of the character unit and the another character unit. The information about the character unit and the information about the another character unit that are obtained by each character unit may be considered as an observed value of the character unit for an environment state. Each character unit in the game needs to determine, based on the observed value for the environment state, an action performed by the character unit, for example, an action like switching an attack target, changing an attack manner, or changing a movement route, so that positive feedback obtained by the character unit from an environment is as high as possible, that is, the character unit can complete the battle task with a loss as little as possible.

For a recommendation task, the recommendation task may be specifically, for example, a social recommendation task, a commodity recommendation task, or an advertisement recommendation task. The commodity recommendation task is used as an example. A server that recommends a commodity to a user may be considered as an agent. A case in which the user taps and browses commodity information recommended by the server, the user stops commodity information recommended by the server, or the like may be considered as a state of a recommendation environment in which the agent is located. That the server recommends a specific piece of commodity information to the user may be considered as an action performed by the server. Because commodities that can be recommended by the server are massive, an action space to which the action that can be performed by the server belongs is continuous, that is, the action space may be considered as including infinite actions. For the server, the server needs to determine, based on an observed value of the state of the recommendation environment, an action performed by the server, for example, an action like recommending specific types of commodities or recommending commodities in specific price ranges, so that positive feedback obtained by the server from the recommendation environment is as high as possible, that is, the user taps and browses the commodity information recommended by the server as frequently as possible.

For a parameter optimization task, the parameter optimization task may be, for example, a task of optimizing a hyperparameter of a neural network in a training process or optimizing a communication parameter in a wireless network scenario. For example, the hyperparameter of the neural network in the training process is optimized. A server used to train the neural network may be considered as an agent. Performance that is of the neural network and that is obtained after the hyperparameter is adjusted during training may be considered as a state of a parameter optimization environment in which the agent is located. A manner in which the server adjusts the hyperparameter of the neural network in the training process may be considered as an action performed by the server. Because the hyperparameter may usually be a value in one or more intervals, an action space to which the action that can be performed by the server belongs is also continuous, that is, the action space may be considered as including infinite actions. For the server, the server needs to determine, based on an observed value of the state of the parameter optimization environment, an action performed by the server, for example, an action like adjusting the hyperparameter to a specific value, so that positive feedback obtained by the server from the parameter optimization environment is as high as possible, that is, performance of a neural network obtained through training after the hyperparameter is adjusted is as high as possible.

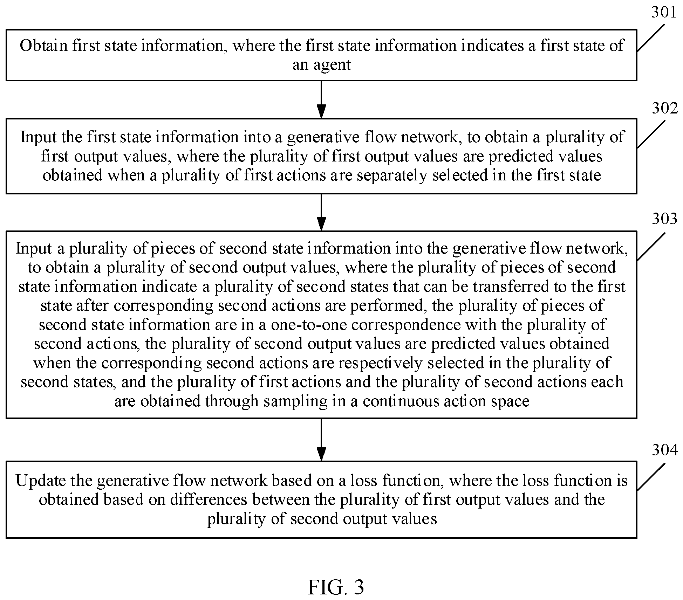

FIG. 3 is a schematic flowchart of a method for training a generative flow network according to an embodiment of this application. As shown in FIG. 3, the method for training a generative flow network includes the following steps 301 to 304.

Step 301: Obtain first state information, where the first state information indicates a first state of an agent.

In this embodiment, the agent is an ontology of a task to which the generative flow network is applied, and is a learner or a decision maker. For example, when the generative flow network is applied to processing of an autonomous driving task, the agent is an autonomous driving vehicle on which the generative flow network is deployed. For another example, when the generative flow network is applied to processing of a robot control task, the agent is a robot on which the generative flow network is deployed. For example, when the generative flow network is applied to processing of a game character control task, the agent is a computer on which the generative flow network is deployed, and the computer is configured to control a game character.

As the agent performs different actions, the agent transfers to different states. For example, in the autonomous driving task, after the autonomous driving vehicle performs an acceleration action, the autonomous driving vehicle moves to different locations, and is closer to an obstacle on a front side. For another example, in the robot control task, after the robot rotates a mechanical arm, the mechanical arm is at different positions, and a distance between the mechanical arm and goods also changes.

In general, the first state information is information indicating the first state of the agent, where the first state of the agent may be any state. For example, in the autonomous driving task, the first state information may be information that indicates a location of the autonomous driving vehicle used as the agent on a map, a distance between the autonomous driving vehicle and another vehicle, a distance between the autonomous driving vehicle and an obstacle, and the like. For another example, in the robot control task, the first state information may be information such as a location of the robot used as the agent in a warehouse, a distance between the robot and another robot, and a distance between the mechanical arm of the robot and the goods.

Optionally, the first state information is obtained based on a state sequence, and the state sequence indicates a plurality of ordered states. In the state sequence, in a previous state, an action is performed to transfer from the previous state to a next state. In other words, the state sequence records a plurality of states that are transferred in an orderly manner and that are of the agent.

Optionally, in the state sequence, a state in the plurality of states is obtained based on a previous state and an execution action corresponding to the previous state, the execution action corresponding to the previous state is selected from a plurality of actions obtained through sampling in the action space, and selection probabilities of the plurality of actions are obtained based on predicted values output by the generative flow network.

Specifically, the state sequence may be generated by an electronic device based on the generative flow network. In a process of generating the state sequence, the electronic device first randomly samples K actions from an action space corresponding to a current state, and then inputs state information corresponding to the current state into the generative flow network, to obtain K output values of the generative flow network for the K actions in the current state, that is, the generative flow network selects predicted values of the K actions in the current state. Second, a normalization operation is performed on the K output values output by the generative flow network, to obtain, through calculation, probability values of separately selecting the K actions in the current state, and further, one of the actions is selected based on the probability values of the K actions, to transfer to a next state based on the current state and the selected action. By analogy, for each state, the electronic device obtains a plurality of actions through sampling in a continuous action space, calculates a selection probability of each of the plurality of actions by using the generative flow network, and selects an action based on the selection probability of each action, to perform the action to obtain a next state. In this way, the electronic device continuously selects corresponding actions in different states, so that continuous transfer between states can be implemented, and further, the state sequence including the plurality of states are obtained.

Step 302: Input the first state information into the generative flow network, to obtain a plurality of first output values, where the plurality of first output values are predicted values obtained when a plurality of first actions are separately selected in the first state.

In this embodiment, the generative flow network is used to predict, based on the input state information, a probability value for selecting each action. Simply, after the first state information is input into the generative flow network, the generative flow network can obtain, through prediction, predicted values obtained when all given actions are separately selected in the first state, and these predicted values can be converted into probability values used for selecting all the actions.

For example, it is assumed that the plurality of first actions are respectively an action 1 to an action 5, and the plurality of first output values obtained by the generative flow network for the action 1 to the action 5 are respectively 1, 2, 4, 5, and 6. In this case, probability values for selecting the action 1 to the action by the agent in the first state may be 1/(1+2+4+5+6), 2/(1+2+4+5+6), 4/(1+2+4+5+6), 5/(1+2+4+5+6), and 6/(1+2+4+5+6).

The plurality of first output values obtained by the generative flow network based on the input first state information is in a one-to-one correspondence with the plurality of first actions, that is, the plurality of first output values are respectively used to represent predicted values obtained when the corresponding first actions are selected in the first state. In addition, the plurality of first actions corresponding to the plurality of first output values are obtained through sampling in a continuous action space. An action included in the continuous action space is a continuous variable, that is, the plurality of first actions may be a plurality of actions obtained through sampling in an action interval range. For example, in an autonomous driving scenario, it is assumed that an action space in which the plurality of first actions are located is a space of accelerating to 0 km/h to 100 km/h. In this case, a specific quantity of actions (namely, the plurality of first actions) can be obtained through random sampling performed in the action space. For example, it is assumed that a quantity of sampled actions is 5. In this case, the plurality of first actions obtained through sampling are respectively accelerating to 5 km/h, accelerating to 11 km/h, accelerating to 23 km/h, accelerating to 55 km/h, and accelerating to 88 km/h.

In this embodiment, a quantity of the plurality of first output values is determined based on a quantity of the plurality of first actions obtained through sampling, and the quantity of the plurality of first actions may be determined based on a precision requirement and a capability of an electronic device that trains the generative flow network. For example, the quantity of the plurality of first actions is a value like 1000, 5000, or 10000. The quantity of the plurality of first actions is not specifically limited in this embodiment.

Step 303: Input a plurality of pieces of second state information into the generative flow network, to obtain a plurality of second output values, where the plurality of pieces of second state information indicate a plurality of second states that can be transferred to the first state after corresponding second actions are performed, the plurality of pieces of second state information are in a one-to-one correspondence with the plurality of second actions, the plurality of second output values are predicted values obtained when the corresponding second actions are respectively selected in the plurality of second states, and the plurality of first actions and the plurality of second actions each are obtained through sampling in a continuous action space.

In this embodiment, because the first state may be obtained by transferring another state, a pre-transfer state may be determined based on the first state that is used as a post-transfer state. Specifically, because an action space in which an action used to transfer the state is located is continuous, that is, the action used for transfer to obtain the first state is infinite, the plurality of second actions may be obtained in a sampling manner, and the plurality of second actions are actions used for transfer to the first state. In addition, because a rule for transfer between states is usually unchanged, the plurality of second states before transfer to the first state can be determined based on the plurality of second actions. The plurality of second actions are in a one-to-one correspondence with the plurality of second states. For any one of the plurality of second states, after a corresponding second action is performed in the second state, the second state can be transferred to the first state.

For example, it is assumed that, in a robot control scenario, in the first state, a rotation angle of the mechanical arm of the robot is 50 degrees, and the plurality of second actions obtained through sampling are respectively: rotating the mechanical arm by -5 degrees, rotating the mechanical arm by -1 degrees, rotating the mechanical arm by 2 degrees, rotating the mechanical arm by 3 degrees, and rotating the mechanical arm by 5 degrees. In this case, in the plurality of second states corresponding to the plurality of second actions, rotation angles of the mechanical arm of the robot are respectively 55 degrees, 56 degrees, 53 degrees, 52 degrees, and 50 degrees. In the plurality of second states, the robot can transfer to the first state by performing the second actions respectively corresponding to the plurality of second states.

The plurality of pieces of second state information are respectively input into the generative flow network, so that the plurality of second output values output by the generative flow network can be obtained, where each of the plurality of second output values indicates a predicted value for selecting the corresponding second action in the second state corresponding to the second output value. In other words, the plurality of pieces of second state information is in a one-to-one correspondence with the plurality of second actions, and the plurality of pieces of second state information is further in a one-to-one correspondence with the plurality of second output values. Each second output value is a predicted value obtained by the generative flow network based on the second state information and the second action that correspond to the second output value.

For example, it is assumed that the plurality of second states are respectively a state 1 to a state 5, the plurality of second actions corresponding to the plurality of second states are respectively an action 1 to an action 5, and the plurality of second output values output by the generative flow network are respectively an output value 1 to an output value 5. In this case, after the plurality of pieces of second state information are input into the generative flow network, the output value 1 obtained by the generative flow network is a predicted value for selecting the action 1 in the state 1, the output value 2 obtained by the generative flow network is a predicted value for selecting the action 2 in the state 2, and the output value 3 obtained by the generative flow network is a predicted value for selecting the action 3 in the state 3. By analogy, each output value has a corresponding second state and a corresponding second action.

In this embodiment, the plurality of first actions and the plurality of second actions each are obtained through sampling in a continuous action space. An action space corresponding to the plurality of first actions and an action space corresponding to the plurality of second actions may be a same action space, or may be different action spaces. In addition, the action space corresponding to the plurality of first actions and the action space corresponding to the plurality of second actions each are a continuous action space.

For example, in the robot control scenario, it is assumed that a rotation angle range of the mechanical arm of the robot is 0 degrees to 90 degrees. In this case, when the first state is a state in which a rotation angle of the mechanical arm is 90 degrees, the action space of the plurality of first actions corresponding to the first state is a space in which the rotation angle ranges from -90 degrees to 0 degrees, and the action space corresponding to the plurality of second actions may be a space in which the rotation angle ranges from 0 degrees to 90 degrees. In other words, the action space corresponding to the plurality of first actions and the action space corresponding to the plurality of second actions may be different action spaces.

For another example, in a game character control scenario, when the first state is a state in which a game character is located at coordinates (0, 0), the action space of the plurality of first actions corresponding to the first state may be a space of moving 0 meters to 10 meters in any direction, and the action space corresponding to the plurality of second actions may also be a space of moving 0 meters to 10 meters in any direction. In other words, the action space corresponding to the plurality of first actions and the action space corresponding to the plurality of second actions may be a same action space.

Optionally, a quantity of the plurality of first actions is the same as a quantity of the plurality of second actions. For example, both the quantity of the plurality of first actions and the quantity of the plurality of second actions are K, where K is an integer greater than 1. For example, K is a value like 1000, 5000, or 10000. A specific value of K is not limited in this embodiment.

In this solution, the quantity of the plurality of first actions is limited to be the same as the quantity of the plurality of second actions, so that accuracy of approximately representing the continuous action space by using the plurality of first actions and the plurality of second actions can be improved as much as possible, and further, precision of a generative flow network obtained through training is improved.

Step 304: Update the generative flow network based on a loss function, where the loss function is obtained based on differences between the plurality of first output values and the plurality of second output values.

After the plurality of first output values and the plurality of second output values output by the generative flow network are obtained, the plurality of first output values may be considered as a plurality of output flows obtained through sampling in the first state, the plurality of second output values may be considered as a plurality of input flows obtained through sampling in the first state, and further, the loss function is calculated based on differences between the plurality of first output values and the plurality of second output values, to update the generative flow network based on the loss function.

In this embodiment, in a process of training the generative flow network, for any state of an agent, a plurality of first actions performed in the state and a plurality of second actions that can be transferred to the state are selected from a continuous action space in a sampling manner, then, predicted values corresponding to the plurality of first actions and the plurality of second actions are output by using the generative flow network, and further, a loss function used to update the generative flow network is obtained through calculation. In this solution, a plurality of actions obtained through sampling are used to approximately represent the continuous action space, and then, the generative flow network is trained, so that the trained generative flow network can be applied to processing of continuous control tasks. This increases a scenario in which the generative flow network can be applied, and facilitates promotion and application of the generative flow network.

Optionally, when the first state information is obtained based on the state sequence, the electronic device may obtain state information corresponding to each state in the state sequence, and then obtain, through calculation based on the foregoing steps 301 to 304, a loss function corresponding to each piece of state information, and finally, uniformly update the generative flow network based on the loss function corresponding to each piece of state information. In other words, for all the states in the state sequence, the electronic device may generate corresponding loss functions, and then, the electronic device performs weighted summation on the loss functions corresponding to all the states, to obtain a final loss function, and updates the generative flow network based on the final loss function.

Optionally, in some cases, when transferring to some specific states, the agent can obtain a specific reward. In this way, the agent is encouraged to transfer to the some specific states as much as possible in an exploration process. In this case, for a state node with a reward, an optimization objective of the generative flow network is to make an inflow of the state node as close as possible to a sum of an outflow and the reward.

Therefore, in a process of calculating the loss function, the electronic device may further obtain a first reward value, where the first reward value is obtained based on a reward obtained by the agent when the agent transfers to the first state. Then, the electronic device calculates the loss function based on the first reward value, the plurality of first output values, and the plurality of second output values. Specifically, the loss function is obtained based on a difference between a subtraction result and the first reward value, and the subtraction result is a difference between a sum of the plurality of first output values and a sum of the plurality of second output values.

To be specific, the electronic device first calculates a sum of the plurality of first output values and a sum of the plurality of second output values, uses the sum of the plurality of first output values as an outflow corresponding to the first state, and uses the sum of the plurality of second output values as an inflow corresponding to the first state. In this way, a difference between the inflow and the outflow is subtracted from the first reward value, to obtain the loss function.

Optionally, the first reward value may be related to the quantity of the plurality of first actions and a metric value of the action space, and the metric value indicates a size of the action space. Specifically, after a reward corresponding to the first state is obtained, the first reward value can be obtained through calculation based on the reward corresponding to the first state, the quantity of the plurality of first actions, and the metric value of the action space. For example, it is assumed that the reward corresponding to the first state is $R(s_t)$, the quantity of the plurality of first actions is K, and the metric value of the action space is $\mu(A)$. In this case, the first reward value may be represented as $K/\mu(A) \times R(s_t)$.

Optionally, in some other cases, a reward that can be obtained by the agent in a state transfer process may be related to an action performed by the agent, that is, the reward is no longer related only to a state of the agent. In this case, a reward value in the first state may be calculated based on the second action performed during transfer to the first state.

For example, for the loss function calculated by the electronic device, the loss function includes a first loss function and a second loss function. The first loss function is obtained based on a difference between a sum of the plurality of first output values and a sum of the plurality of second output values, the second loss function is obtained based on a difference between a target output value and a second reward value, the target output value is one of the plurality of second output values, and the second reward value is related to the action corresponding to the second output value.

In other words, in a process of calculating the loss function, for a state node, a reward that is related to an execution action and that is on the state node is as close as possible to an inflow corresponding to the execution action.

In this solution, the loss function is divided into two parts. One part is a difference between an inflow and an outflow that correspond to a state node, and the other part is a difference between an output value of the generative flow network for an action and a reward value corresponding to the action. In this way, an effective loss function can be constructed in an environment in which a reward is related to an action, so that precision of a generative flow network obtained through training is improved.

Optionally, before step 303 is performed, the electronic device may obtain the plurality of pieces of second state information in the following manner.

Specifically, the electronic device obtains the plurality of second actions from the action space through sampling, that is, the electronic device randomly selects a plurality of actions from the action space, to obtain the plurality of second actions. Then, the electronic device inputs the first state information and the plurality of second actions into a state prediction model, to obtain the plurality of pieces of second state information, where the state prediction model is used to obtain a pre-transfer state through prediction based on an execution action and a post-transfer state.

For example, the state prediction model is, for example, a neural network like a convolutional neural network, a residual network, a multilayer perceptron neural network, or a reinforcement learning network. A specific structure of the state prediction model is not limited in embodiments. The state prediction model may be obtained by training a large amount of sample data. For example, a state pair and an action corresponding to the state pair are collected to form sample data, and then, the state prediction model is trained based on the sample data, to obtain the state prediction model that can obtain a pre-transfer state through prediction based on an execution action and a post-transfer state. In the sample data, the state pair may include two states: one is a pre-transfer state, and the other is a post-transfer state. An action corresponding to the state pair is an action that enables the pre-transfer state to be transferred to the post-transfer state.

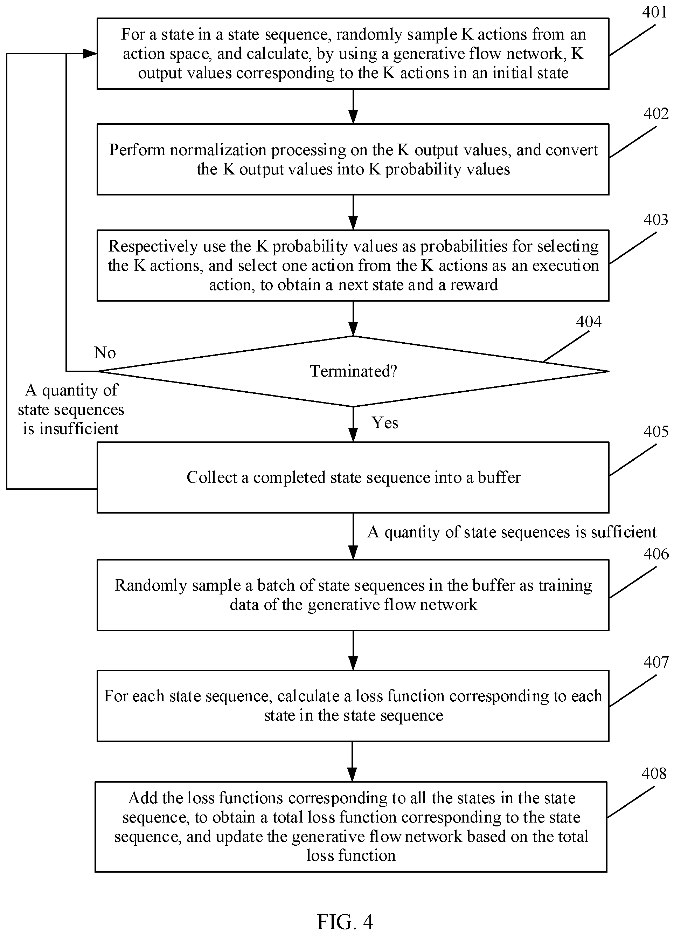

The foregoing describes a method for training a generative flow network provided in embodiments of this application. For ease of understanding, the following describes in detail an execution process of the method for training a generative flow network provided in embodiments of this application with reference to specific examples. As shown in FIG. 4, the execution process of the method for training a generative flow network includes the following steps 401 to 408.

Step 401: For a state in a state sequence, randomly sample K actions from an action space, and calculate, by using the generative flow network, K output values corresponding to the K actions in an initial state.

In this embodiment, at the beginning of constructing the state sequence, the initial state may be obtained first, and then, the state sequence is gradually constructed based on the initial state. The initial state may be a specified state, or may be a randomly selected state. The initial state is not limited in this embodiment.

In a process of constructing the state sequence, a last state in the state sequence is processed each time, so that the last state is transferred to a new state, and states in the state sequence are gradually increased.

Specifically, this step is similar to the foregoing step 302. Information related to the state in the state sequence is input into the generative flow network, so that the generative flow network can obtain, through prediction, predicted values obtained when the K actions obtained through sampling are separately selected in the state, and these predicted values can be converted into probability values used for selecting all the actions. Herein, K is an integer greater than 1. A quantity of K may be determined based on a precision requirement and a capability of an electronic device that trains the generative flow network. For example, the quantity of K is a value like 1000, 5000, or 10000. This is not specifically limited in this embodiment.

Step 402: Perform normalization processing on the K output values, and convert the K output values into K probability values.

In this step, normalization processing is performed on the K output values, so that each output value can be converted into a value in an interval [0, 1]. In this way, the K output values are converted into the K probability values. For example, it is assumed that the K output values are respectively 1, 2, 4, 5, and 6. In this case, the K probability values obtained through conversion from the K output values may be 1/(1+2+4+5+6), 2/(1+2+4+5+6), 4/(1+2+4+5+6), 5/(1+2+4+5+6), and 6/(1+2+4+5+6).

Step 403: Respectively use the K probability values as probabilities for selecting the K actions, and select one action from the K actions as an execution action, to obtain a next state and a reward.

For example, it is assumed that K is 4, and the K probability values corresponding to the K actions are respectively 0.1, 0.2, 0.3, and 0.5. In this case, a probability for selecting a first action is 0.1, a probability for selecting a second action is 0.2, a probability for selecting a third action is 0.3, and a probability for selecting a fourth action is 0.5. Based on the probability of each action, one action may be selected from the K actions as an execution action in a current state. After the action in the current state is selected, the selected action is performed, so that the current state can be transferred to the next state, and the reward for the state transfer is obtained.

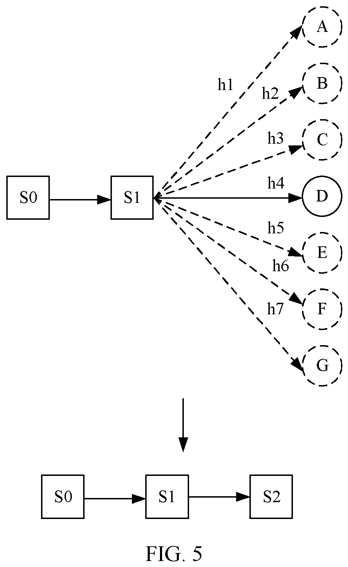

For example, FIG. 5 is a diagram of generating a state sequence according to an embodiment of this application. As shown in FIG. 5, the state sequence includes an initial state S0 and a state S1. When a next state of the state S1 is generated, seven actions (namely, an action A to an action G) are obtained from an action space through sampling. In addition, the generative flow network performs calculation to obtain a selection probability (namely, h1 to h7) of each of the seven actions. Finally, based on the selection probability of the seven actions, an action D is selected from the seven actions as an execution action, and the action D is performed in the state S1, so that the state S1 is transferred to a state S2.

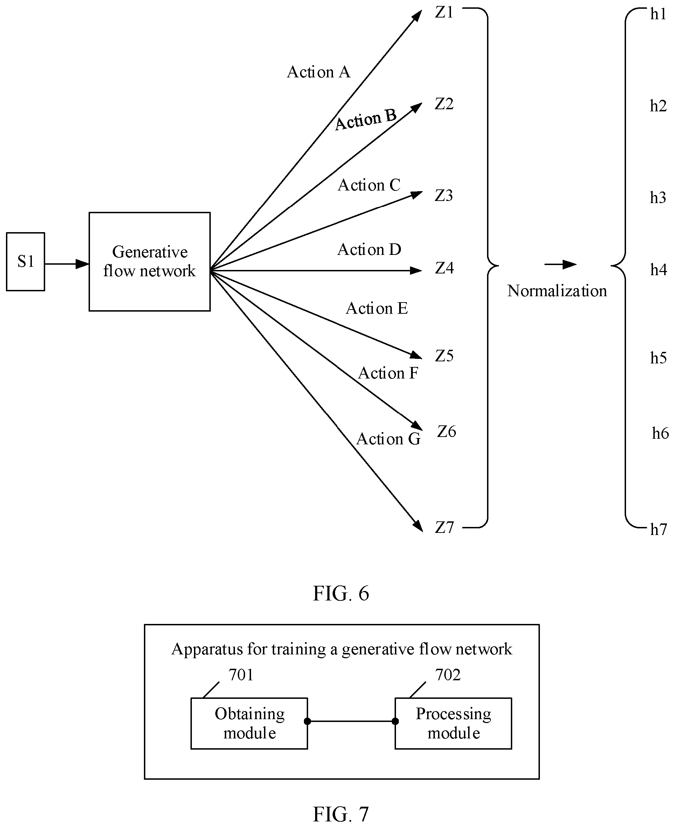

FIG. 6 is a diagram of determining a selection probability of an action according to an embodiment of this application. As shown in FIG. 6, state information of the state S1 is input into the generative flow network, so that output values (namely, output values Z1 to Z7) obtained by the generative flow network for the action A to the action G can be obtained, where each action corresponds to one output value, and the output value indicates a predicted value for selecting a corresponding action in the state S1. Then, normalization processing is performed on the output values Z1 to Z7, so that each output value can be converted into a value in an interval [0, 1]. In this way, the seven output values are converted into seven probability values (namely, h1 to h7).

Step 404: Determine whether a last state in the state sequence reaches an end point, or whether a quantity of state transfer steps reaches a maximum quantity of steps.

Each time state transfer is completed, a new state is added to the state sequence. In this case, whether a last state in the state sequence reaches the end point (that is, whether the newly added state is an end point state) may be determined, or whether the quantity of state transfer steps reaches the maximum quantity of steps may be determined. The maximum quantity of steps may be a preset step value.

If the last state in the state sequence reaches the end point, or the quantity of state transfer steps reaches the maximum quantity of steps, step 405 is performed; or if the last state in the state sequence does not reach the end point, and the quantity of state transfer steps does not reach the maximum quantity of steps, step 401 is performed.

Step 405: Collect a completed state sequence into a buffer, and perform step 401 until a preset quantity of state sequences are collected into the buffer.

When the last state in the state sequence reaches the end point, or the quantity of state transfer steps reaches the maximum quantity of steps, a completed state sequence can be obtained. Therefore, the state sequence may be collected into the buffer, to be used as sample data for subsequently training the generative flow network.

When an insufficient quantity of state sequences are collected into the buffer, step 401 continues to be performed, and a new state sequence continues to be generated until a sufficient quantity of state sequences are collected into the buffer.

Step 406: Randomly sample a batch of state sequences in the buffer as training data of the generative flow network after the preset quantity of state sequences are collected into the buffer.

Step 407: For each state sequence, calculate a loss function corresponding to each state in the state sequence.

Specifically, for any state in the state sequence, the loss function corresponding to each state may be calculated based on the foregoing steps 301 to 304. For details, refer to the foregoing steps 301 to 304.

Step 408: Add the loss functions corresponding to all the states in the state sequence, to obtain a total loss function corresponding to the state sequence, and update the generative flow network based on the total loss function.

In this step, the state sequence is used as a training sample of the generative flow network. Therefore, in a training process, a sum of the loss functions corresponding to all the states in the entire state sequence is calculated, and the obtained total loss function is used as a loss function of the state sequence, to update the generative flow network.

For ease of understanding, the following specifically describes, with reference to a formula, a process of calculating a loss function of a generative flow network.

First, the following defines a structure in a state sequence.

An edge between two adjacent states in the state sequence may be defined as traffic between the two states. That is, $F(s_t, a_t)=F(s_t \rightarrow s_{t+1})$, where $F(s_t, a_t)$ represents an action flow of performing the action at in the state $s_t$, $F(s_t \rightarrow s_{t+1})$ represents an edge between the state $s_t$ and the state $s_{t+1}$, and the state $s_{t+1}$ is a state to which the state $s_t$ is transferred when the action at is performed in the state st.

For a state in the state sequence, a continuous state flow $F(S)$ is an integral of a complete trajectory flow $\tau$ passing through the state, that is, the continuous state flow $F(S)$ is all traffic passing through the state. The trajectory flow is defined as any non-negative function defined on a complete trajectory set. For each trajectory, an associated flow includes a quantity of particles sharing a same path.

Specifically, the continuous state flow $F(S)$ may be represented by using the following formula:

$$F(s) = \int_{\tau:s\in\tau} F(\tau)\mathrm{d}\tau$$

For any state $s_t$ in the state sequence, a parent set in the state $s_t$ is represented as P(st), where $P(s_t)$ includes all other states that can reach the state st.

For any state $s_t$ in the state sequence, a subset in the state $s_t$ is represented as $C(s_t)$, where $C(s_t)$ includes all other states that the state $s_t$ can reach.

For any state $s_t$ in the state sequence, all inflows in the state $s_t$ are integrals of all traffic that can reach the state $s_t$. Specifically, all the inflows in the state $s_t$ may be represented by using the following formula:

$$\int_{s\in\mathcal{P}(s_t)} F(s \to s_t)\mathrm{d}s = \int_{s,a:T(s,a)=s_t} F(s,a)\mathrm{d}s\mathrm{d}a, \ s.t. \ T(s,a) \notin \{s_0, ..., s_{t-1}\}$$

Herein, $T(s,a)=s_t$ represents that the state s can be transferred to the state $s_t$ after the action a is performed on the state s, and *s.t. $T(s,a) \notin \{s_0, ..., s_{t-1}\}$* represents that $T(s,a)$ does not belong to $\{s_0, ..., s_{t-1}\}$.

For any state $s_t$ in the state sequence, all outflows in the state $s_t$ are integrals of action flows corresponding to all actions that can be performed in the state st. Specifically, all the outflows in the state $s_t$ may be represented by using the following formula:

$$\int_{s\in\mathcal{C}(s_t)} F(s_t \to s)\mathrm{d}s = \int_{a\in\mathcal{A}} F(s_t,a)\mathrm{d}a, \ s.t. \ T(s_t,a) \notin \{s_0, ..., s_t\}$$

Herein, A represents an action space, and A includes all the actions that can be performed in the state st.

Generally, when a loss function corresponding to each state is calculated, all outflows and all inflows in each state are made to be as equal as possible, that is, $\int_{s\in\mathcal{P}(s_t)} F(s \to s_t)\mathrm{d}s = \int_{s\in\mathcal{C}(s_t)} F(s_t \to s)\mathrm{d}s$. However, in a continuous control task, because an action space corresponding to each state is continuous, that is, the action space includes infinite actions, all the outflows and all the inflows of the state cannot be obtained through calculation by traversing all the actions.

Therefore, embodiments proposes that all the outflows and all the inflows in the state are approximately represented in the action space by randomly sampling K actions. Specifically, all the outflows in the state $s_t$ may be approximately represented by using the following formula:

$$\int_{a\in\mathcal{A}} F(s_t,a)\mathrm{d}a \approx \frac{\mu(\mathcal{A})}{K} \sum_{k=1}^{K} F(s_t,a_k)$$

Herein, $\mu(A)$ represents a metric value of the action space A, and indicates a size of the action space A, and $\mu(A)$ is a constant; and K represents a quantity of actions sampled from the action space A.

In other words, all the outflows of the state $s_t$ may be approximately represented as a product of an average value of action flows corresponding to the K actions obtained through sampling and the metric value of the action space A.

In comparison, approximations of all the inflows in the state $s_t$ is more difficult to calculate because a parent node state in the state $s_t$ needs to be found first. Based on this, in this embodiment, a state prediction model G is constructed. The state prediction model G can output a pre-transfer state based on an input post-transfer state and an execution action. Then, the K actions are randomly sampled in the action space as execution actions for transfer to the state st, and the parent node state in the state $s_t$ is obtained through calculation based on the state prediction model G. Specifically, all the inflows in the state $s_t$ may be approximately represented by using the following formula:

$$\int_{s,a:T(s,a)=s_t} F(s,a)\mathrm{d}s\,\mathrm{d}a \approx \frac{\mu(\mathcal{A})}{K} \sum_{k=1}^{K} F(G_\phi(s_t,a_k),a_k)$$

Herein, $G_\phi(s_t,a_k)$ represents the parent node state in the state $s_t$ when an action $a_k$ is performed, and $F(G_\phi(s_t,a_k), a_k)$ represents an action flow from the parent node state $G_\phi(s_t,a_k)$ to the state st.

According to the foregoing two formulas, in this embodiment, all the outflows and all the inflows corresponding to each state can be approximately represented. Based on this, in this embodiment, the loss function corresponding to the state sequence can be constructed based on approximations of all the outflows corresponding to each state and approximations of all the inflows corresponding to each state.

For example, when a reward that can be obtained by the agent in a state transfer process is related only to a state transferred by the agent, the loss function corresponding to the state sequence may be specifically shown in the following formula:

$$\mathcal{L}_\theta(\tau) = \sum_{s_t=s_1}^{s_f} \left[ \sum_{k=1}^{K} F_\theta(G_\phi(s_t,a_k),a_k) - \lambda R(s_t) - \mathbb{I}_{s_t \neq s_f} \sum_{k=1}^{K} F_\theta(s_t,a_k) \right]^2$$

Herein, $\mathcal{L}_\theta(\tau)$ represents the loss function of the state sequence, $s_1$ is a second state in the state sequence, $s_f$ is a last state in the state sequence, $\mathbb{I}_{s_t \neq s_f}$ represents that the state $s_t$ is unequal to the state $s_f$, $\lambda = K/\mu(A)$, and R(st) is a reward function related to the state st.

In addition, in some cases, a reward that can be obtained by the agent in a state transfer process may be related to an action performed by the agent, that is, the reward is no longer related only to a state of the agent. In this case, the loss function may be divided into two parts. One part is a difference between an inflow and an outflow that correspond to a state node, and the other part is a difference between an output value of the generative flow network for an action and a reward value corresponding to the action. Specifically, when the reward is related to the action performed by the agent, the loss function corresponding to the state sequence may be specifically shown in the following formula:

$$\mathcal{L}_\theta^1(\tau) = \sum_{s_t=s_1}^{s_{f-1}} \left[ \sum_{k=1}^{K} F_\theta(G_\phi(s_t,a_k),a_k) - \sum_{k=1}^{K} F_\theta(s_t,a_k) \right]^2,$$

$$\mathcal{L}_\theta^2(\tau) = \sum_{s_t=s_0}^{s_f} \left( F_\theta(s_t,a_t) - R(s_t,a_t) \right)^2.$$

Herein, $\mathcal{L}_\theta^1(\tau)$ represents a loss function 1, $\mathcal{L}_\theta^2(\tau)$ represents a loss function 2, a total loss function corresponding to the state sequence is obtained based on the loss function 1 and the loss function 2, $s_0$ is a first state in the state sequence, and $R(s_t,a_t)$ represents a reward function related to the state $s_t$ and the action at.

In another possible embodiment, when the reward is related to the action performed by the agent, the loss function corresponding to the state sequence may be further specifically shown in the following formula:

$$\mathcal{L}_\theta^1(\tau) = \sum_{s_t=s_1}^{s_{f-1}} \left\{ \log \left[ \epsilon + \sum_{k=1}^{K} \exp F_\theta^{\log}(G_\phi(s_t,a_k),a_k) \right] - \log \left[ \epsilon + \sum_{k=1}^{K} \exp F_\theta^{\log}(s_t,a_k) \right] \right\}^2 ,$$

and

$$\mathcal{L}_\theta^2(\tau) = \sum_{s_t=s_0}^{s_f} \left( \log\left[ \epsilon + \exp F_\theta^{\log}(s_t, a_t) \right] - R(s_t, a_t) \right)^2$$

.

Herein, $\varepsilon$ is a hyperparameter, and log() represents calculating a logarithm.

The foregoing describes in detail the method for training a generative flow network provided in embodiments of this application. The following describes a device that is provided in embodiments of this application and that is configured to perform the foregoing method.

FIG. 7 is a diagram of a structure of an apparatus for training a generative flow network according to an embodiment of this application. As shown in FIG. 7, an apparatus for training a generative flow network provided in this embodiment of this application includes: an obtaining module 701, configured to obtain first state information, where the first state information indicates a first state of an agent; and

a processing module 702, configured to input the first status information into the generative flow network, to obtain a plurality of first output values, where the plurality of first output values are predicted values obtained when a plurality of first actions are separately selected in the first status, where

the processing module 702 is further configured to input a plurality of pieces of second state information into the generative flow network, to obtain a plurality of second output values, where the plurality of pieces of second state information indicate a plurality of second states that can be transferred to the first state after corresponding second actions are performed, the plurality of pieces of second state information are in a one-to-one correspondence with the plurality of second actions, the plurality of second output values are predicted values obtained when the corresponding second actions are respectively selected in the plurality of second states, and the plurality of first actions and the plurality of second actions each are obtained through sampling in a continuous action space; and

the processing module 702 is further configured to update the generative flow network based on a loss function, where the loss function is obtained based on differences between the plurality of first output values and the plurality of second output values.

In a possible implementation, an action included in the continuous action space is a continuous variable.

In a possible implementation, a quantity of the plurality of first actions is the same as a quantity of the plurality of second actions.

In a possible implementation, the obtaining module 701 is further to obtain a first reward value, where the first reward value is obtained based on a reward obtained by the agent when the agent transfers to the first state; and

the loss function is obtained based on a difference between a subtraction result and the first reward value, and the subtraction result is a difference between a sum of the plurality of second output values and a sum of the plurality of first output values.

In a possible implementation, the first reward value is related to the quantity of the plurality of first actions and a metric value of the action space, and the metric value indicates a size of the action space.

In a possible implementation, the loss function includes a first loss function and a second loss function; and the first loss function is obtained based on a difference between a sum of the plurality of first output values and a sum of the plurality of second output values, the second loss function is obtained based on a difference between a target output value and a second reward value, the target output value is one of the plurality of second output values, and the second reward value is related to the action corresponding to the second output value.

In a possible implementation, the processing module 702 is further configured to:

obtain the plurality of second actions from the action space through sampling; and
input the first state information and the plurality of second actions into a state prediction model, to obtain the plurality of pieces of second state information, where the state prediction model is used to obtain a pre-transfer state through prediction based on an execution action and a post-transfer state.

In a possible implementation, the first state information is obtained based on a state sequence, and the state sequence indicates a plurality of ordered states.

In a possible implementation, a state in the plurality of states is obtained based on a previous state and an execution action corresponding to the previous state, the execution action corresponding to the previous state is selected from a plurality of actions obtained through sampling in the action space, and selection probabilities of the plurality of actions are obtained based on predicted values output by the generative flow network.

In a possible implementation, the generative flow network is used to process a task having a continuous action space, and the task includes an autonomous driving task, a robot control task, a game character control task, a recommendation task, a parameter optimization task, or a protein structure search task.

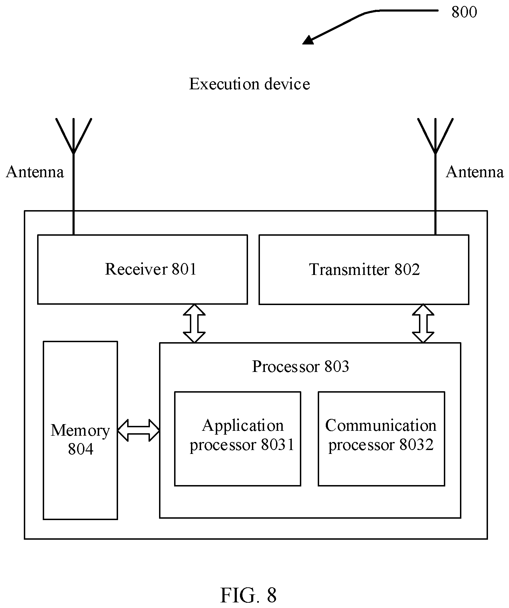

FIG. 8 is a diagram of a structure of an execution device according to an embodiment of this application. An execution device 800 may be specifically represented as a mobile phone, a tablet computer, a notebook computer, an intelligent wearable device, a server, or the like. This is not limited herein. Specifically, the execution device 800 includes a receiver 801, a transmitter 802, a processor 803, and a memory 804 (there may be one or more processors 803 in the execution device 800, and one processor is used as an example in FIG. 8). The processor 803 may include an application processor 8031 and a communication processor 8032. In some embodiments of this application, the receiver 801, the transmitter 802, the processor 803, and the memory 804 may be connected through a bus or in another manner.

The memory 804 may include a read-only memory and a random access memory, and provide instructions and data to the processor 803. A part of the memory 804 may further include a non-volatile random access memory (non-volatile random access memory, NVRAM). The memory 804 stores a processor and operation instructions, executable modules or data structures, or a subset thereof, or an extended set thereof, where operation instructions may include various operation instructions used to implement various operations.

The processor 803 controls an operation of the execution device. In specific application, the components of the execution device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiment of this application may be applied to the processor 803, or implemented by the processor 803. The processor 803 may be an integrated circuit chip and has a signal processing capability. In an implementation process, the steps in the foregoing method may be implemented by using a hardware integrated logical circuit in the processor 803, or by using instructions in a form of software. The processor 803 may be a general-purpose processor, a digital signal processor (digital signal processor, DSP), a microprocessor, or a microcontroller. The processor 803 may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 803 may implement or perform methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 804, and a processor 803 reads information in the memory 804 and completes the steps in the foregoing methods in combination with hardware of the processor.

The receiver 801 may be configured to: receive input digital or character information, and generate signal input related to a related setting and function control of the execution device. The transmitter 802 may be configured to output digital or character information through a first interface. The transmitter 802 may be further configured to send instructions to a disk pack through the first interface, to modify data in the disk pack. The transmitter 802 may further include a display device, for example, a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the model hyperparameter selection method described in embodiments, or a chip in a training device performs the model hyperparameter selection method described in embodiments. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

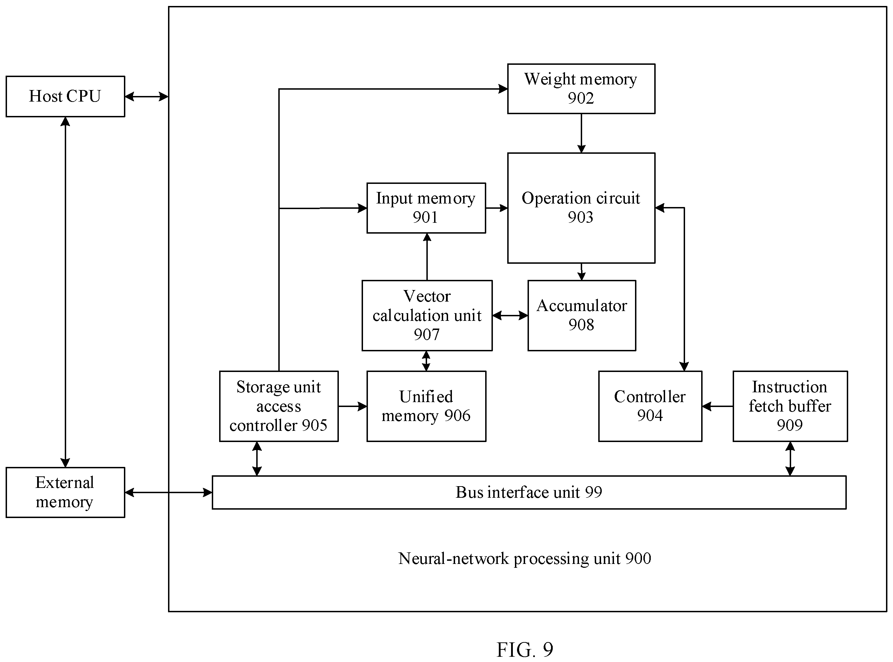

Specifically, refer to FIG. 9. FIG. 9 is a diagram of a structure of a chip according to an embodiment of this application. The chip may be represented as a neural-network processing unit NPU 900. The NPU 900 is mounted to a host CPU (Host CPU) as a coprocessor, and the host CPU allocates a task. A core part of the NPU is an operation circuit 903. A controller 904 controls the operation circuit 903 to extract matrix data in a memory and perform a multiplication operation.

In some implementations, the operation circuit 903 internally includes a plurality of processing units (Process Engine, PE). In some implementations, the operation circuit 903 is a two-dimensional systolic array. The operation circuit 903 may alternatively be a one-dimensional systolic array or another electronic circuit that can perform mathematical operations such as multiplication and addition. In some implementations, the operation circuit 903 is a general-purpose matrix processor.

For example, it is assumed that there is an input matrix A, a weight matrix B, and an output matrix C. The operation circuit fetches data corresponding to the matrix B from the weight memory 902, and buffers the data in each PE in the operation circuit. The operation circuit fetches data of the matrix A from an input memory 901, to perform a matrix operation on the matrix B, and stores an obtained partial result or an obtained final result of the matrix into an accumulator (accumulator) 908.

A unified memory 906 is configured to store input data and output data. Weight data is directly transferred to the weight memory 902 through a direct memory access controller (Direct Memory Access Controller, DMAC) DMAC 905. The input data is also transferred to the unified memory 906 through the DMAC.

BIU is a Bus Interface Unit, namely, a bus interface unit 99. The bus interface unit 99 is configured to perform interaction between an AXI bus and the DMAC and between the AXI bus and an instruction fetch buffer (Instruction Fetch Buffer, IFB) 909.

The bus interface unit 99 (Bus Interface Unit, BIU) is used by the instruction fetch buffer 909 to obtain instructions from an external memory, and is further used by the storage unit access controller 905 to obtain original data of the input matrix A or the weight matrix B from the external memory.

The DMAC is mainly configured to transfer input data in an external memory DDR to the unified memory 906, or transfer the weight data to the weight memory 902, or transfer the input data to the input memory 901.

A vector calculation unit 907 includes a plurality of operation processing units. If necessary, the vector calculation unit 907 performs further processing, such as vector multiplication, vector addition, an exponential operation, a logarithm operation, and size comparison, on output of the operation circuit 903. The vector calculation unit 907 is mainly used for non-convolutional/fully connected layer network calculation in a neural network, such as batch normalization (batch normalization), pixel-level summation, and upsampling for a feature map.

In some implementations, the vector calculation unit 907 can store a processed output vector in the unified memory 906. For example, the vector calculation unit 907 may apply a linear function or a non-linear function to output of the operation circuit 903. For example, the vector calculation unit 907 performs linear interpolation on a feature map extracted by a convolutional layer, and, for another example, vectors of values are accumulated, to generate an activation value. In some implementations, the vector calculation unit 907 generates a normalized value, a pixel-level summation value, or both. In some implementations, the processed output vector can be used as an activation input of the operation circuit 903, for example, can be used in a subsequent layer in the neural network.

The instruction fetch buffer (instruction fetch buffer) 909 connected to the controller 904 is configured to store instructions used by the controller 904.

The unified memory 906, the input memory 901, the weight memory 902, and the instruction fetch buffer 909 are all on-chip memories. The external memory is private to the NPU hardware architecture.

Any one of the processors mentioned above may be a general-purpose central processing unit, a microprocessor, an ASIC, or one or more integrated circuits for controlling program execution.

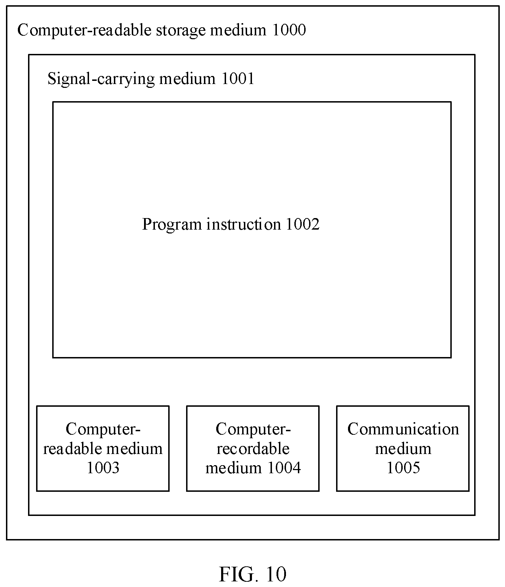

FIG. 10 is a diagram of a structure of a computer-readable storage medium according to an embodiment of this application. This application further provides a computer-readable storage medium. In some embodiments, the method disclosed in FIG. 3 may be implemented as computer program instructions encoded in a machine-readable format on the computer-readable storage medium or encoded in another non-transitory medium or product.

FIG. 10 schematically shows a conceptual partial view of an example computer-readable storage medium arranged according to at least some embodiments shown herein, and the example computer-readable storage medium includes a computer program for executing a computer process on a computing device.

In an embodiment, a computer-readable storage medium 1000 is provided by using a signal-carrying medium 1001. The signal-carrying medium 1001 may include one or more program instructions 1002, and when the one or more program instructions 1002 are run by one or more processors, the foregoing functions or some functions described for FIG. 3 may be provided. Therefore, for example, refer to the embodiment shown in FIG. 3, one or more features of steps 301 to 304 may be undertaken by one or more instructions associated with the signal-carrying medium 1001. In addition, the program instruction 1002 in FIG. 10 is also described as an example instruction.

In some examples, the signal-carrying medium 1001 may include a computer-readable medium 1003, for example, but not limited to, a hard disk drive, a compact disc (CD), a digital video disc (DVD), a digital tape, a memory, a ROM, or a RAM.

In some implementations, the signal-carrying medium 1001 may include a computer-recordable medium 1004, for example, but not limited to, a memory, a read/write (R/W) CD, an R/W DVD, or the like. In some implementations, the signal-carrying medium 1001 may include a communication medium 1005, for example, but not limited to, a digital and/or analog communication medium (for example, an optical fiber cable, a waveguide, a wired communication link, or a wireless communication link). Therefore, for example, the signal-carrying medium 1001 may be conveyed by a wireless-form communication medium 1005 (for example, a wireless communication medium that complies with the IEEE 802.11 standard or another transmission protocol).

The one or more program instructions 1002 may be, for example, computer-executable instructions or logic implementation instructions. In some examples, a computing device may be configured to provide various operations, functions, or actions in response to the program instruction 1002 transmitted to the computing device by using one or more of the computer-readable medium 1003, the computer-recordable medium 1004, and/or the communication medium 1005.

In addition, it should be noted that the described apparatus embodiments are merely examples. The units described as separate parts may or may not be physically separate, and parts displayed as units may or may not be physical units. In other words, the parts may be located in one location, or may be distributed on a plurality of network units. Some or all the modules may be selected based on an actual requirement to achieve the objectives of the solutions of embodiments. In addition, in the accompanying drawings of the apparatus embodiments provided in this application, connection relationships between modules indicate that the modules have communication connections with each other. The communication connections may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function completed by a computer program may be easily implemented by using corresponding hardware. In addition, specific hardware structures used to implement a same function may be various, for example, an analog circuit, a digital circuit, or a dedicated circuit. However, for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, all or some of the processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, like a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A method for training a generative flow network, comprising:

   obtaining first state information, wherein the first state information indicates a first state of an agent;
   inputting the first state information into the generative flow network, to obtain a plurality of first output values, wherein the plurality of first output values are predicted values obtained when a plurality of first actions are separately selected in the first state;
   inputting a plurality of pieces of second state information into the generative flow network, to obtain a plurality of second output values, wherein the plurality of pieces of second state information indicate a plurality of second states that can be transferred to the first state after corresponding second actions are performed, the plurality of pieces of second state information are in a one-to-one correspondence with the plurality of second actions, the plurality of second output values are predicted values obtained when the corresponding second actions are respectively selected in the plurality of second states, and the plurality of first actions and the plurality of second actions each are obtained through sampling in a continuous action space; and
   updating the generative flow network based on a loss function, wherein the loss function is obtained based on differences between the plurality of first output values and the plurality of second output values.

2. The method according to claim 1, wherein an action comprised in the continuous action space is a continuous variable.

3. The method according to claim 1 or 2, wherein a quantity of the plurality of first actions is the same as a quantity of the plurality of second actions.

4. The method according to any one of claims 1 to 3, wherein the method further comprises:

    obtaining a first reward value, wherein the first reward value is obtained based on a reward obtained by the agent when the agent transfers to the first state; and
    the loss function is obtained based on a difference between a subtraction result and the first reward value, and the subtraction result is a difference between a sum of the plurality of second output values and a sum of the plurality of first output values.

5. The method according to claim 4, wherein the first reward value is related to the quantity of the plurality of first actions and a metric value of the action space, and the metric value indicates a size of the action space.

6. The method according to any one of claims 1 to 3, wherein the loss function comprises a first loss function and a second loss function; and
    the first loss function is obtained based on a difference between a sum of the plurality of first output values and a sum of the plurality of second output values, the second loss function is obtained based on a difference between a target output value and a second reward value, the target output value is one of the plurality of second output values, and the second reward value is related to the action corresponding to the second output value.

7. The method according to any one of claims 1 to 6, wherein the method further comprises:

    obtaining the plurality of second actions from the action space through sampling; and
    inputting the first state information and the plurality of second actions into a state prediction model, to obtain the plurality of pieces of second state information, wherein the state prediction model is used to obtain a pre-transfer state through prediction based on an execution action and a post-transfer state.

8. The method according to any one of claims 1 to 7, wherein the first state information is obtained based on a state sequence, and the state sequence indicates a plurality of ordered states.

9. The method according to claim 8, wherein a state in the plurality of states is obtained based on a previous state and an execution action corresponding to the previous state, the execution action corresponding to the previous state is selected from a plurality of actions obtained through sampling in the action space, and selection probabilities of the plurality of actions are obtained based on predicted values output by the generative flow network.

10. The method according to any one of claims 1 to 9, wherein the generative flow network is used to process a task having a continuous action space, and the task comprises an autonomous driving task, a robot control task, a game character control task, a recommendation task, a parameter optimization task, or a protein structure search task.

11. An apparatus for training a generative flow network, comprising:

    an obtaining module, configured to obtain first state information, wherein the first state information indicates a first state of an agent; and
    a processing module, configured to input the first state information into the generative flow network, to obtain a plurality of first output values, wherein the plurality of first output values are predicted values obtained when a plurality of first actions are separately selected in the first state, wherein
    the processing module is further configured to input a plurality of pieces of second state information into the generative flow network, to obtain a plurality of second output values, wherein the plurality of pieces of second state information indicate a plurality of second states that can be transferred to the first state after corresponding second actions are performed, the plurality of pieces of second state information are in a one-to-one correspondence with the plurality of second actions, the plurality of second output values are predicted values obtained when the corresponding second actions are respectively selected in the plurality of second states, and the plurality of first actions and the plurality of second actions each are obtained through sampling in a continuous action space; and
    the processing module is further configured to update the generative flow network based on a loss function, wherein the loss function is obtained based on differences between the plurality of first output values and the plurality of second output values.

12. The apparatus according to claim 11, wherein an action comprised in the continuous action space is a continuous variable.

13. The apparatus according to claim 11 or 12, wherein a quantity of the plurality of first actions is the same as a quantity of the plurality of second actions.

14. The apparatus according to any one of claims 11 to 13, wherein

the obtaining module is further configured to obtain a first reward value, wherein the first reward value is obtained based on a reward obtained by the agent when the agent transfers to the first state; and

the loss function is obtained based on a difference between a subtraction result and the first reward value, and the subtraction result is a difference between a sum of the plurality of second output values and a sum of the plurality of first output values.

15. The apparatus according to claim 14, wherein the first reward value is related to the quantity of the plurality of first actions and a metric value of the action space, and the metric value indicates a size of the action space.

16. The apparatus according to any one of claims 11 to 13, wherein the loss function comprises a first loss function and a second loss function; and

the first loss function is obtained based on a difference between a sum of the plurality of first output values and a sum of the plurality of second output values, the second loss function is obtained based on a difference between a target output value and a second reward value, the target output value is one of the plurality of second output values, and the second reward value is related to the action corresponding to the second output value.

17. The apparatus according to any one of claims 11 to 16, wherein the processing module is further configured to:

obtain the plurality of second actions from the action space through sampling; and

input the first state information and the plurality of second actions into a state prediction model, to obtain the plurality of pieces of second state information, wherein the state prediction model is used to obtain a pre-transfer state through prediction based on an execution action and a post-transfer state.

18. The apparatus according to any one of claims 11 to 17, wherein the first state information is obtained based on a state sequence, and the state sequence indicates a plurality of ordered states.

19. The apparatus according to claim 18, wherein a state in the plurality of states is obtained based on a previous state and an execution action corresponding to the previous state, the execution action corresponding to the previous state is selected from a plurality of actions obtained through sampling in the action space, and selection probabilities of the plurality of actions are obtained based on predicted values output by the generative flow network.

20. The apparatus according to any one of claims 11 to 19, wherein the generative flow network is used to process a task having a continuous action space, and the task comprises an autonomous driving task, a robot control task, a game character control task, a recommendation task, a parameter optimization task, or a protein structure search task.

21. An apparatus for training a generative flow network, comprising a memory and a processor, wherein the memory stores code, the processor is configured to execute the code, and when the code is executed, the apparatus performs the method according to any one of claims 1 to 10.

22. A computer storage medium, wherein the computer storage medium stores instructions, and when the instructions are executed on a computer, the computer is enabled to implement the method according to any one of claims 1 to 10.

23. A computer program product, wherein the computer program product stores instructions, and when the instructions are executed on a computer, the computer is enabled to implement the method according to any one of claims 1 to 10.

FIG. 1

FIG. 2

Obtain first state information, where the first state information indicates a first state of an agent  301

Input the first state information into a generative flow network, to obtain a plurality of first output values, where the plurality of first output values are predicted values obtained when a plurality of first actions are separately selected in the first state  302

Input a plurality of pieces of second state information into the generative flow network, to obtain a plurality of second output values, where the plurality of pieces of second state information indicate a plurality of second states that can be transferred to the first state after corresponding second actions are performed, the plurality of pieces of second state information are in a one-to-one correspondence with the plurality of second actions, the plurality of second output values are predicted values obtained when the corresponding second actions are respectively selected in the plurality of second states, and the plurality of first actions and the plurality of second actions each are obtained through sampling in a continuous action space  303

Update the generative flow network based on a loss function, where the loss function is obtained based on differences between the plurality of first output values and the plurality of second output values  304

FIG. 3

For a state in a state sequence, randomly sample K actions from an action space, and calculate, by using a generative flow network, K output values corresponding to the K actions in an initial state — 401

Perform normalization processing on the K output values, and convert the K output values into K probability values — 402

Respectively use the K probability values as probabilities for selecting the K actions, and select one action from the K actions as an execution action, to obtain a next state and a reward — 403

Terminated? — 404

No

A quantity of state sequences is insufficient

Yes

Collect a completed state sequence into a buffer — 405

A quantity of state sequences is sufficient

Randomly sample a batch of state sequences in the buffer as training data of the generative flow network — 406

For each state sequence, calculate a loss function corresponding to each state in the state sequence — 407

Add the loss functions corresponding to all the states in the state sequence, to obtain a total loss function corresponding to the state sequence, and update the generative flow network based on the total loss function — 408

FIG. 4

FIG. 5

Action A

Z1 — h1

Action B

Z2

h2

Action C

Z3

h3

S1 → Generative flow network

Action D

Z4 → Normalization → h4

Action E

Z5

h5

Action F

Z6

h6

Action G

Z7 — h7

FIG. 6

Apparatus for training a generative flow network

701

702

Obtaining module — Processing module

FIG. 7

800

Execution device

Antenna                                    Antenna

| Receiver 801 | Transmitter 802 |

Processor 803

| Memory 804 | Application processor 8031 | Communication processor 8032 |

FIG. 8

FIG. 9

Neural-network processing unit 900

- Weight memory 902
- Operation circuit 903
- Accumulator 908
- Controller 904
- Instruction fetch buffer 909
- Input memory 901
- Vector calculation unit 907
- Unified memory 906
- Storage unit access controller 905
- Bus interface unit 99
- Host CPU
- External memory

Computer-readable storage medium 1000

Signal-carrying medium 1001

Program instruction 1002

| Computer-readable medium 1003 | Computer-recordable medium 1004 | Communication medium 1005 |
| --- | --- | --- |

FIG. 10

## INTERNATIONAL SEARCH REPORT

| International application No. |
| --- |
| **PCT/CN2023/118714** |

**A. CLASSIFICATION OF SUBJECT MATTER**

G06N3/0464(2023.01)i; G06N3/08(2023.01)i

According to International Patent Classification (IPC) or to both national classification and IPC

**B. FIELDS SEARCHED**

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNABS, CNTXT, WOTXT, VEN, EPTXT, USTXT, IEEE, CNKI: 流模型, 状态信息, 动作信息, 动作空间, 连续, 损失函数, flow, grownet+, station, action, continue, loss

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115688876 A (HUAWEI TECHNOLOGIES CO., LTD.) 03 February 2023 (2023-02-03) claims 1-23 | 1-23 |
| A | CN 114065929 A (CHENGDU RONG'AO TECHNOLOGY CO., LTD.) 18 February 2022 (2022-02-18) description, paragraphs 37-58 | 1-23 |
| A | CN 111389006 A (NETEASE (HANGZHOU) NETWORK CO., LTD.) 10 July 2020 (2020-07-10) entire document | 1-23 |
| A | CN 111950726 A (HUAWEI TECHNOLOGIES CO., LTD.) 17 November 2020 (2020-11-17) entire document | 1-23 |
| A | WO 2021238303 A1 (HUAWEI TECHNOLOGIES CO., LTD.) 02 December 2021 (2021-12-02) entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 November 2023** | **04 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118714**

| Patent document cited in search report | | | Publication date (day/month/year) | Patent family member(s) | | | Publication date (day/month/year) |
|---|---|---|---|---|---|---|---|
| CN | 115688876 | A | 03 February 2023 | None | | | |
| CN | 114065929 | A | 18 February 2022 | None | | | |
| CN | 111389006 | A | 10 July 2020 | None | | | |
| CN | 111950726 | A | 17 November 2020 | None | | | |
| WO | 2021238303 | A1 | 02 December 2021 | CN | 113805572 | A | 17 December 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211197060